# EUROPEAN PATENT APPLICATION

(11) **EP 4 664 628 A1**
(43) Date of publication of application: **17.12.2025**
(21) Application number: 25171872.2
(22) Date of filing: 23.04.2025
(51) Int. Cl.: H01M 50/204, H01M 50/249, H01M 50/367

(54) **POWER STORAGE DEVICE**

(30) Priority: 13.06.2024 JP 2024096208
(71) Applicant: TOYOTA JIDOSHA KABUSHIKI KAISHA, Toyota-shi, Aichi-ken 471-8571 (JP)
(72) Inventor: INOUE, Shigeyuki, Toyota-shi, 471-8571 (JP); SUGIE, Kazuki, Toyota-shi, 471-8571 (JP); KUMAZAWA, Kazuya, Toyota-shi, 471-8571 (JP); KAWAMOTO, Naoya, Toyota-shi, 471-8571 (JP)
(74) Representative: TBK

(57) **Abstract**

In a power storage device (100), a smoke exhaust valve (1) is disposed in a smoke exhaust space (S20) through which gas discharged from a gas exhaust valve (SV) of a power storage cell (10) flows. A housing (20) includes a bottom portion (21g), a side wall portion (21c) extending upward from an outer peripheral edge of the bottom portion (21g), and a protruding portion (21f) protruding from the side wall portion (21c). The smoke exhaust valve (1) is provided in the protruding portion (21f) and is disposed above a lower surface (11) of the power storage cell (10).

## Description

### CROSS REFERENCE TO RELATED APPLICATIONS

This nonprovisional application is based on Japanese Patent Application No. 2024-096208 filed on June 13, 2024 with the Japan Patent Office, the entire contents of which are hereby incorporated by reference.

### BACKGROUND

### Field

The present disclosure relates to a power storage device.

### Description of the Background Art

Japanese Patent Laying-Open No. 2006-228526 discloses a battery pack including a battery case accommodating a battery module and an auxiliary component. The battery case includes a lower case supporting the battery module and the auxiliary component.

### SUMMARY

Although not described in Japanese Patent Laying-Open No. 2006-228526 above, the lower case may be provided with a smoke exhaust valve for discharging gas (smoke) discharged from the battery module (power storage cell). In this configuration, the smoke exhaust valve may be damaged upon impact on the lower case from below.

The present disclosure has been made to solve the problem described above. An object of the present disclosure is to provide a power storage device that can suppress damage to a smoke exhaust valve provided in a lower case.

A power storage device according to an aspect of the present disclosure includes a power storage cell including a lower surface on which a gas exhaust valve is provided, a housing that accommodates the power storage cell, and a smoke exhaust valve. The housing has a cell space in which the power storage cell is disposed. The smoke exhaust valve is disposed in a space through which gas discharged from the gas exhaust valve flows. The housing includes a bottom portion disposed below the power storage cell, a side wall portion extending upward from an outer peripheral edge of the bottom portion, and a protruding portion protruding from the side wall portion. The smoke exhaust valve is provided on the protruding portion or the side wall portion and is disposed above the lower surface of the power storage cell.

In the power storage device according to the aspect of the present disclosure, the smoke exhaust valve is provided on the protruding portion or the side wall portion and is disposed above the lower surface of the power storage cell, as described above. Thus, an impact (interference) on the smoke exhaust valve from below can be suppressed more than when the smoke exhaust valve is provided to be level with the lower surface of the power storage cell or is provided below the lower surface of the power storage cell. This can suppress damage to the smoke exhaust valve provided in the lower case.

In addition, the bottom portion of the lower case is disposed below the smoke exhaust valve, and thus, an impact on the smoke exhaust valve from below can be prevented by the bottom portion. This can further suppress damage to the smoke exhaust valve provided in the lower case.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 schematically shows a vehicle including a power storage device according to an embodiment.
Fig. 2 is a perspective view of the power storage device and a vehicle body according to the embodiment.
Fig. 3 is a sectional view of the power storage device according to the embodiment, as viewed from below.
Fig. 4 is a sectional view taken along the line IV-IV in Fig. 3.
Fig. 5 is a perspective view showing a configuration of a power storage cell.
Fig. 6 is a sectional view taken along the line VI-VI in Fig. 4.
Fig. 7 is a partially enlarged view of a smoke exhaust valve and its vicinity in Fig. 4.
Fig. 8 is a plan view of the smoke exhaust valve and its vicinity as viewed from below.
Fig. 9 is a first view of a sectional perspective view showing configurations of a lower case and a fixing member.
Fig. 10 is a second view of the sectional perspective view showing the configurations of the lower case and the fixing member.
Fig. 11 is a sectional view taken along the line XI-XI in Fig. 9.
Fig. 12 is a sectional view taken along the line XII-XII in Fig. 9.
Fig. 13 is a sectional view taken along the line XIII-XIII in Fig. 8.
Fig. 14 is a sectional view showing a configuration of a power storage device according to Modification 1 of the embodiment.
Fig. 15 is a sectional view showing a configuration of a power storage device according to Modification 2 of the embodiment.

### DESCRIPTION OF THE PREFERRED EMBODIMENTS

An embodiment of the present disclosure will be described with reference to the drawings. In the drawings referred to below, the same or corresponding components have the same reference characters allotted.

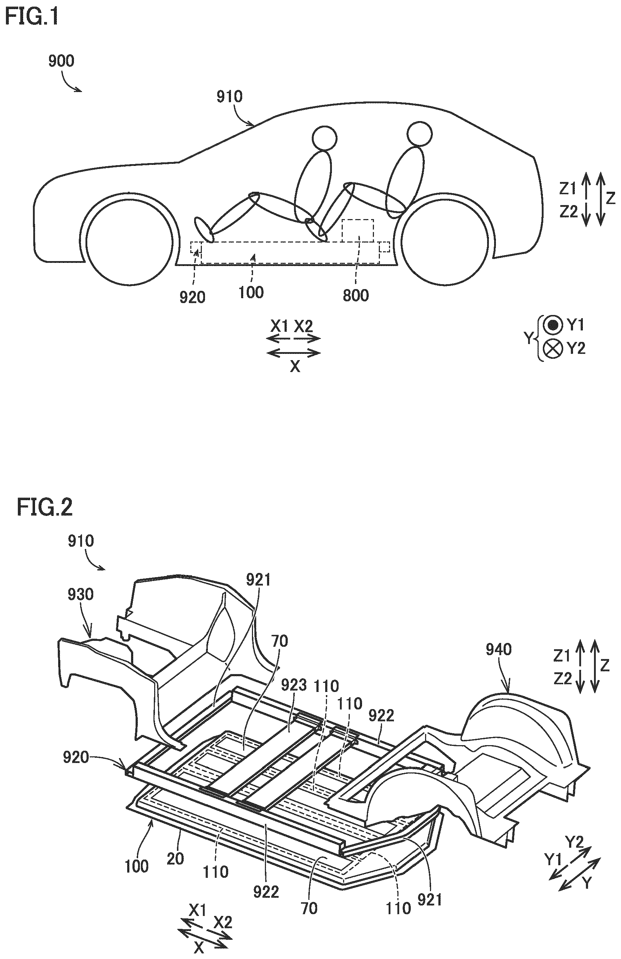

A power storage device 100 in an embodiment of the present disclosure will be described with reference to Figs. 1 to 13. Fig. 1 is a schematic side view of a vehicle 900 including power storage device 100 according to the present embodiment. An X direction, a Y direction, and a Z direction in this specification are mutually orthogonal to one another. For example, the X direction and the Y direction are the front-rear direction and the vehicle width direction of vehicle 900, respectively, when power storage device 100 is mounted in vehicle 900. An X1 direction and an X2 direction are the vehicle front direction and the vehicle rear direction, respectively. A Y1 direction and a Y2 direction are the vehicle left side and the vehicle right side of the vehicle, respectively. The Z direction is the upward-downward (vertical) direction.

As shown in Fig. 1, power storage device 100 includes a device unit 800. Vehicle 900 includes a vehicle body 910. Examples of vehicle 900 include a hybrid electric vehicle, a plug-in hybrid electric vehicle, and a battery electric vehicle. Vehicle body 910 includes a frame member 920. Frame member 920 is disposed at the bottom of vehicle body 910.

As shown in Fig. 2, frame member 920 includes a pair of first frames 921, a pair of second frames 922, and a cross frame 923.

The pair of first frames 921 face each other in the X direction. In the example shown in Fig. 2, first frame 921 disposed forward (X1 side) is shaped to extend along the Y direction. First frame 921 disposed rearward (X2 side) is shaped to extend along the Y direction and protrude rearward.

The pair of second frames 922 face each other in the Y direction. Each second frame 922 is shaped to extend along the X direction. The ends of each second frame 922 in the X direction are respectively connected to first frames 921. The pair of second frames 922, together with the pair of first frames 921, form a frame having the shape of an approximately square prism that surrounds power storage device 100.

Cross frame 923 is disposed between the pair of first frames 921 and couples the pair of second frames 922 to each other. Cross frame 923 constitutes, for example, a seat cross.

A front component 930 is connected to the front of frame member 920. A rear component 940 is connected to the rear of frame member 920. Each of front component 930 and rear component 940 may be formed by aluminum die casting.

Power storage device 100 is attached to frame member 920. Power storage device 100 is disposed below cross frame 923. Power storage device 100 includes four power storage stacks 110, a housing 20, and a cooler 70. The number of power storage stacks 110 is not limited to four.

Each power storage stack 110 is formed into a rectangular parallelepiped that is long in the X direction. The four power storage stacks 110 are disposed side by side along the Y direction.

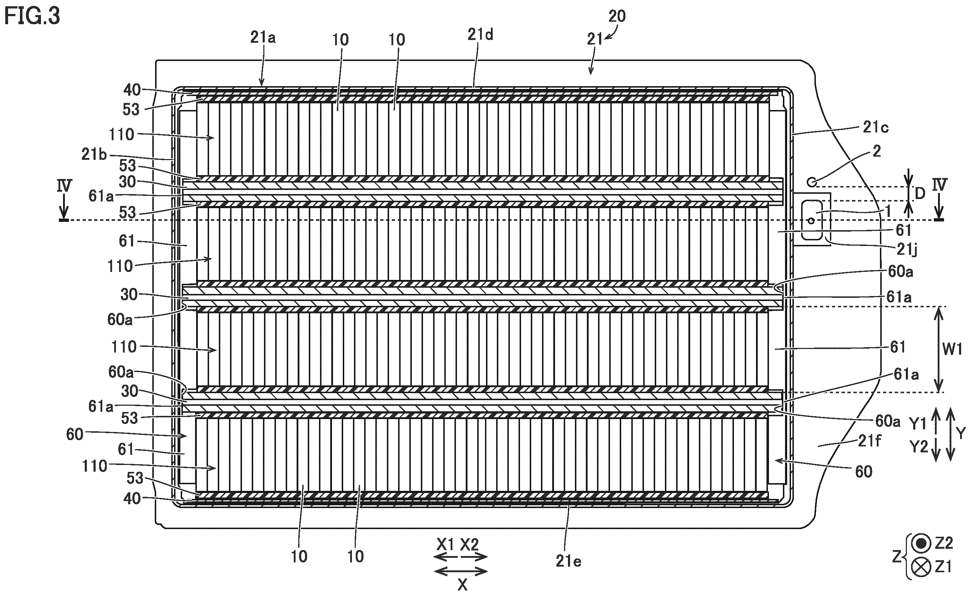

Fig. 3 is a sectional view of power storage device 100 as viewed from below. Power storage device 100 includes a plurality of power storage cells 10, a plurality of cross members 30, a plurality of support members 40, a plurality of inner seal portions 53, and a fixing member 60. Each power storage stack 110 includes a plurality of (e.g., 50) power storage cells 10 arranged in the X direction.

Housing 20 accommodates at least one power storage cell 10. In the present embodiment, housing 20 accommodates four power storage stacks 110.

Housing 20 includes a lower case 21. Lower case 21 is open upward. Lower case 21 includes a peripheral wall portion 21a. Peripheral wall portion 21a is provided to surround (the lower parts of) the plurality of power storage stacks 110 together. In other words, peripheral wall portion 21a is formed annularly.

Peripheral wall portion 21a includes a side wall portion 21b, a side wall portion 21c, a side wall portion 21d, and a side wall portion 21e. Side wall portion 21b is disposed on the X1 side relative to the four power storage stacks 110. Side wall portion 21c is disposed on the X2 side relative to the four power storage stacks 110. Side wall portion 21d is disposed on the Y1 side relative to the four power storage stacks 110. Side wall portion 21e is disposed on the Y2 side relative to the four power storage stacks 110.

Lower case 21 includes a protruding portion 21f. Protruding portion 21f is provided to protrude from side wall portion 21c. Specifically, protruding portion 21f is provided to protrude from the upper end of side wall portion 21c to the X2 side.

Power storage device 100 includes a smoke exhaust valve 1 and a breathing membrane 2. Smoke exhaust valve 1 releases the pressure in housing 20. Smoke exhaust valve 1 opens when the pressure in housing 20 becomes more than or equal to a reference value. Smoke exhaust valve 1 is composed of a check valve. Breathing membrane 2 regulates the pressure in housing 20 by allowing gas (air) to flow therethrough. Smoke exhaust valve 1 does not have to be composed of a check valve. Breathing membrane 2 may be formed of, for example, Gore-Tex (registered trademark) or the like.

Each of smoke exhaust valve 1 and breathing membrane 2 is provided in lower case 21. As smoke exhaust valve 1 is provided in lower case 21, the gas to be discharged through smoke exhaust valve 1 can be discharged downward. As breathing membrane 2 is provided in lower case 21, adhesion of rainwater or the like to breathing membrane 2 from above can be suppressed.

Specifically, each of smoke exhaust valve 1 and breathing membrane 2 is provided on protruding portion 21f of lower case 21. Smoke exhaust valve 1 is placed so as to discharge gas downward (to the Z2 side). Breathing membrane 2 extends along the XY plane, which is orthogonal to the upward-downward direction.

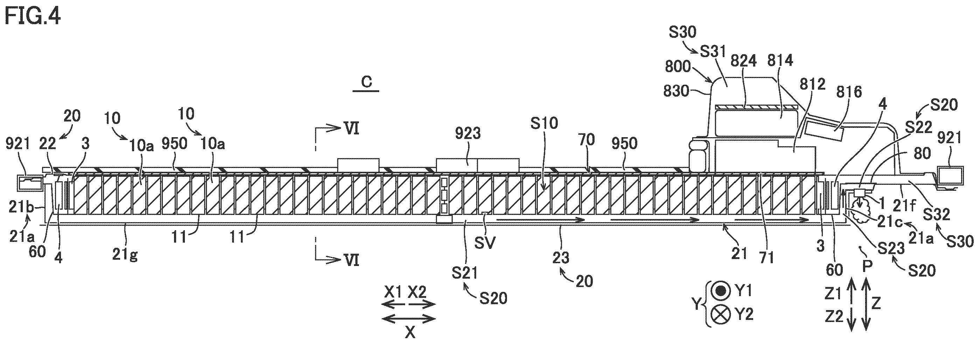

In the present embodiment, smoke exhaust valve 1 is provided adjacent to breathing membrane 2, as viewed from a separation position P (Fig. 4) at which smoke exhaust valve 1 is separated from a bottom surface 21j (which will be described later), on which smoke exhaust valve 1 is disposed, in the direction (Z direction) orthogonal to bottom surface 21j. Specifically, as viewed from separation position P, smoke exhaust valve 1 is disposed on the Y2 side of breathing membrane 2. A distance D in the Y direction between breathing membrane 2 and smoke exhaust valve 1 is smaller than, for example, a width W1 of power storage cell 10 in the Y direction.

Cross member 30 is provided between power storage cell stacks 110 that are adjacent to each other in the Y direction. Cross member 30 extends in the X direction. Cross member 30 extends longer in the X direction than power storage cell stack 110. An X1-side end of cross member 30 projects more to the X1 side than an X1-side end of power storage stack 110. An X2-side end of cross member 30 projects more to the X2 side than an X2-side end of power storage stack 110.

Support members 40 are disposed adjacent to power storage stacks 110, which are located at both ends in the Y direction, among the four power storage stacks 110. Support member 40 is disposed between side wall portion 21d and power storage stack 110 closest to the Y1 side among the four power storage stacks 110, and support member 40 is disposed between side wall portion 21e and power storage stack 110 closest to the Y2 side among the four power storage stacks 110. Support member 40 extends in the X direction, similarly to cross member 30.

Inner seal portions 53 are disposed respectively at the Y1-side end and the Y2-side end of each power storage stack 110. Inner seal portion 53 extends in the X direction along power storage stack 110. Inner seal portion 53 is bonded to the bottom surface of power storage stack 110. Inner seal portion 53 will be described later in detail.

Fixing member 60 is fastened to end plate 3 (not shown in Fig. 3) to fix end plate 3 (Fig. 4). Fixing members 60 are disposed respectively on the X1 side and the X2 side with respect to each power storage stack 110.

Fixing member 60 has a plurality of cut-away parts 60a, into each of which the X-direction end of cross member 30 is inserted. The plurality of cut-away parts 60a are disposed side by side in the Y direction in each fixing member 60.

Fixing member 60 includes a plurality of fixing surfaces 61. End plate 3 is fixed to each of the plurality of fixing surfaces 61. The plurality of fixing surfaces 61 are disposed side by side in the Y direction in each fixing member 60. Cut-away part 60a is disposed between fixing surfaces 61 that are adjacent to each other in the Y direction. In addition, fixing surfaces 61 that are adjacent to each other in the Y direction are connected to each other by a connection portion 61a. Cut-away part 60a is formed by connection portion 61a. Specifically, cut-away part 60a is formed by connection portion 61a and a pair of fixed surfaces 61 that are adjacent to each other in the Y direction.

Fig. 4 is a sectional view taken along the line IV-IV in Fig. 3. As shown in Fig. 3, power storage device 100 further includes a pair of end plates 3 and a monitoring unit 4 (smart battery management).

The pair of end plates 3 sandwich at least one power storage cell 10 in between from both sides in the X direction. In the present embodiment, the pair of end plates 3 sandwich the plurality of power storage cells 10 of each power storage stack 110 in between from both sides in the X direction. Monitoring unit 4 is disposed outside each end plate 3 in the X direction.

Housing 20 has an upper cover 22, a panel member 23, and a device cover 830 in addition to lower case 21.

Upper cover 22 is disposed above at least one power storage cell 10. In the present embodiment, upper cover 22 is disposed above the four power storage stacks 110, and covers the four power storage stacks 110 from above.

Upper cover 22, together with lower case 21, accommodates the four power storage stacks 110. Specifically, upper cover 22, together with lower case 21, accommodates the four power storage stacks 110 in a hermetically sealed state. The peripheral edge of upper cover 22 is connected to the peripheral edge of lower case 21 via a sealing member with a bolt or the like. The plurality of power storage cells 10 (four power storage stacks 110) are disposed in a cell space S10 formed by upper cover 22 and lower case 21. In addition to the plurality of power storage cells 10, the pair of end plates 3, monitoring unit 4, and the like may be disposed in cell space S10.

Panel member 23 is provided below lower case 21. Panel member 23 serves to protect lower case 21. Panel member 23 may be formed as a flat plate.

Lower case 21 includes a bottom portion 21g. Bottom portion 21g is disposed below each power storage stack 110, the pair of end plates 3, and the like, and covers each power storage stack 110, the pair of end plates 3, and the like from below. Bottom portion 21g may be formed as a flat plate.

Peripheral wall portion 21a (Fig. 3) is provided to rise from the outer peripheral edge of bottom portion 21g.

Each of the plurality of power storage cells 10 is provided with a gas exhaust valve SV. The gas generated in each power storage cell 10 is discharged from gas exhaust valve SV to the outside of power storage cell 10. Gas exhaust valve SV is provided on lower surface 11 of each power storage cell 10. For simplicity, only gas exhaust valve SV of one power storage cell 10 is shown in Fig. 4.

In Fig. 4, the direction of the gas discharged from gas exhaust valve SV is indicated by the arrows. The gas flows through a smoke exhaust space S20 formed in housing 20. The gas that has flowed through smoke exhaust space S20 is discharged from smoke exhaust valve 1 disposed in smoke exhaust space S20 to the outside of housing 20. Smoke exhaust space S20 is an example of the "space through which gas flows" in the present disclosure.

Smoke exhaust space S20 includes a plurality of first smoke exhaust spaces S21, a second smoke exhaust space S22, and a connecting flow path S23. Connecting flow path S23 connects each first smoke exhaust space S21 to second smoke exhaust space S22.

First smoke exhaust space S21 is a space formed between lower surfaces 11 of the plurality of power storage cells 10 of each power storage cell stack 110 and bottom portion 21g of lower case 21. First smoke exhaust space S21 and second smoke exhaust space S22 are examples of the "first space" and the "second space", respectively, in the present disclosure.

As described above, as first smoke exhaust space S21 is formed by lower surface 11 of power storage cell 10, the number of parts of power storage device 100 can be reduced, and the configuration of power storage device 100 can be simplified, compared to the case where first smoke exhaust space S21 is formed using a separate component from power storage cell 10.

First smoke exhaust space S21 extends in the X direction. First smoke exhaust space S21 functions as a smoke exhaust path. First smoke exhaust space S21 is a path for discharging the gas discharged from gas exhaust valve SV of power storage cell 10 to the outside of housing 20. Each first smoke exhaust space S21 is connected to a common space (connection flow path S23) inside housing 20 at the end of first smoke exhaust space S21 in the X direction.

Smoke exhaust valve 1 is disposed in second smoke exhaust space S22. In other words, smoke exhaust valve 1 discharges the gas in second smoke exhaust space S22 to the outside of second smoke exhaust space S22. When gas is discharged from any of power storage cells 10, the gas spreads in the X direction through first smoke exhaust space S21, flows through connecting flow path S23 to second smoke exhaust space S22, and is then discharged out of housing 20 through smoke exhaust valve 1.

Cooler 70 cools at least one power storage cell 10. **In** the present embodiment, cooler 70 cools the plurality of power storage cells 10 in each of the four power storage stacks 110. Cooler 70 is disposed above upper cover 22. A cooling medium (e.g., water) flows in cooler 70.

Cooler 70 forms at least a part of a floor 950 of a vehicle compartment C. Floor 950 of vehicle compartment C may include a buffer member, a carpet, and the like disposed on cooler 70, in addition to cooler 70. The buffer member, the carpet, and the like are not shown in Fig. 2.

Device unit 800 is disposed at, for example, the end in the X direction. Specifically, device unit 800 is disposed on the rear of upper cover 22 in the front-rear direction of vehicle 900. Device unit 800 includes a junction box 812, an electricity supply unit 814, an electronic control unit 816, a unit cooler 824, and a device cover 830.

Junction box 812 is disposed above upper cover 22. Junction box 812 accommodates a relay, a fuse, and the like.

Cooler 70 has an intervening portion 71 located between upper cover 22 and junction box 812. Junction box 812 is cooled by intervening portion 71.

Electricity supply unit 814 is disposed above junction box 812. Electricity supply unit 814 is cooled by unit cooler 824 disposed on the upper surface of electricity supply unit 814. Electronic control unit 816 is disposed above junction box 812.

Device cover 830 accommodates junction box 812, electricity supply unit 814, electronic control unit 816, and unit cooler 824.

A device space S30 is formed within housing 20. Device space S30 is in communication with cell space S10.

Device space S30 includes a first device space S31 and a second device space S32. First device space S31 is a space in which device unit 800 is disposed. **In** other words, first device space S31 is a space inside device cover 830. First device space S31 is formed at a position adjacent to vehicle compartment C of vehicle 900 in the X direction.

Second device space S32 is a space below first device space S31 and to the side (X2 side) of cell space S10. Second device space S32 and second smoke exhaust space S22 are adjacent to each other in the upward-downward direction with a partition plate 80 in between. In other words, partition plate 80 partitions second device space S32 and second smoke exhaust space S22 from each other. An unshown motor (rear motor), an unshown auxiliary machine part, and the like may be disposed in second device space S32. In addition, a pipe (not shown) for a cooling liquid used in unit cooler 824 may flow through second device space S32.

Each of cell space S10 and device space S30 is isolated from smoke exhaust space S20. This can prevent the gas circulating through smoke exhaust space S20 from flowing to cell space S10 and device space S30.

Each power storage cell 10 includes an electrode body 10a. Electrode body 10a may be configured as a wound body with a positive electrode sheet and a negative electrode sheet wound with a separator in between, or as a stack with a positive electrode sheet and a negative electrode sheet stacked with a separator in between. Electrode body 10a is shaped to be long in the Y direction.

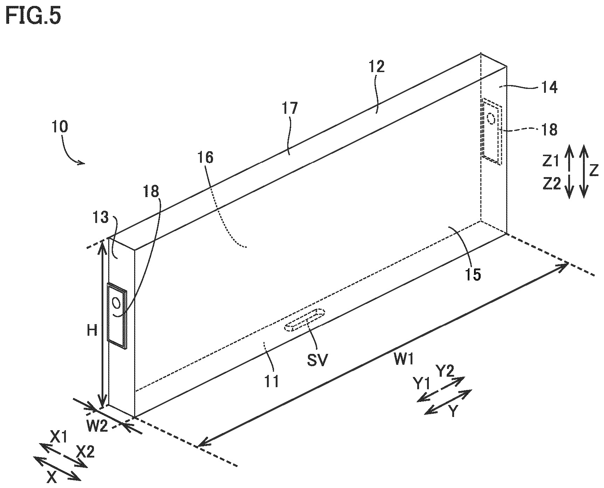

Fig. 5 is a perspective view showing a configuration of power storage cell 10. As shown in Fig. 5, each power storage cell 10 has an upper surface 12, a short side surface 13, a short side surface 14, a long side surface 15, and a long side surface 16, in addition to lower surface 11.

Short side surface 13 and short side surface 14 are arranged in the Y direction. Specifically, short side surface 13 and short side surface 14 are one end surface and the other end surface, respectively, of power storage cell 10 in the Y direction.

Long side surface 15 and long side surface 16 are arranged in the X direction. Specifically, long side surface 15 and long side surface 16 are one end surface and the other end surface, respectively, of power storage cell 10 in the X direction.

Upper surface 12 and lower surface 11 are arranged in the Z direction. Specifically, upper surface 12 and lower surface 11 are a Z1-side end surface and a Z2-side end surface, respectively, of power storage cell 10.

Power storage cell 10 has a cell case 17 and a pair of external terminals 18. Cell case 17 accommodates electrode body 10a (Fig. 4). Lower surface 11, upper surface 12, short side surface 13, short side surface 14, long side surface 15, and long side surface 16 are surfaces that constitute cell case 17.

Cell case 17 is shaped into a rectangular parallelepiped. Cell case 17 is made of a metal, for example, aluminum. Power storage cell 10 is formed to be long in the Y direction. Specifically, width W1 of power storage cell 10 in the Y direction is larger than a width W2 of power storage cell 10 in the X direction. A height H of power storage cell 10 is smaller than width W1 and larger than width W2.

The pair of external terminals 18 project in the Y direction from short side surface 13 and short side surface 14, respectively. Gas exhaust valve SV provided on lower surface 11 opens when the pressure of the smoke or gas in cell case 17 becomes more than or equal to a certain level. In other words, lower surface 11, on which gas exhaust valve SV is provided, constitutes the pressure release surface of cell case 17.

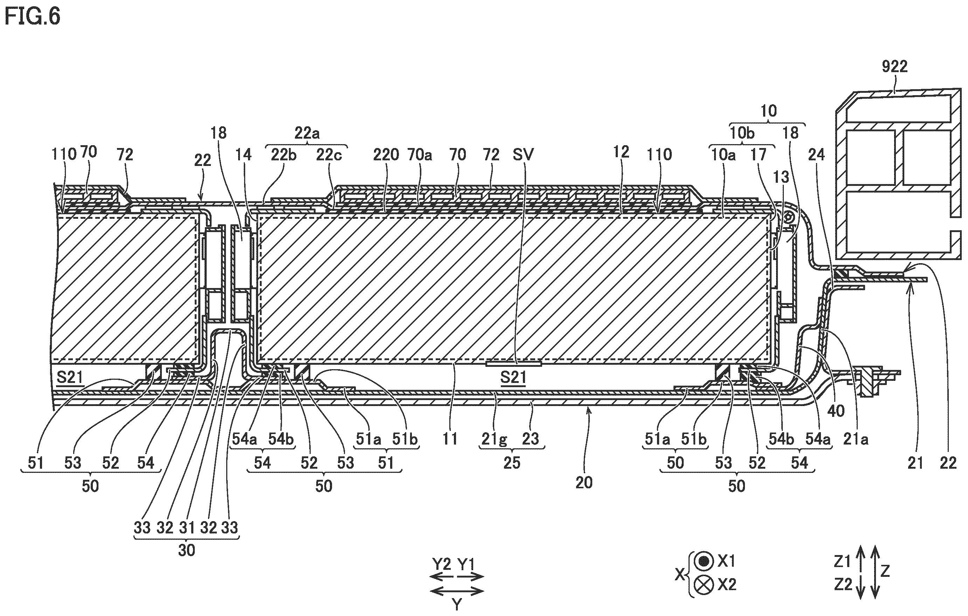

Fig. 6 is a sectional view taken along the line VI-VI in Fig. 4. Power storage device 100 further includes a space defining portion 50 and a covering member 72. Fig. 6 shows power storage cells 10 of two adjacent power storage stacks 110.

Each power storage cell 10 has a cell body 10b. Cell body 10b has electrode body 10a and cell case 17. The thickness direction of cell body 10b corresponds to the X direction. The width direction (the direction that is orthogonal to both the thickness direction and the upward-downward direction) of cell body 10b corresponds to the Y direction.

As shown in Fig. 6, upper cover 22 has an upper wall 22a. Upper wall 22a is provided above at least one power storage cell 10. In the present embodiment, upper wall 22a is provided above four power storage stacks 110. Upper wall 22a has a top portion 22b and four recesses 22c.

Top portion 22b is formed flat. Top portion 22b overlaps, in the upward-downward direction, the Y-direction end of each power storage stack 110.

Each recess 22c is recessed downward from top portion 22b. Each recess 22c is formed flat. Each recess 22c is formed above the central portion of each power storage stack 110 in the Y direction. The length of each recess 22c in the Y direction is smaller than the length of power storage cell 10 in the Y direction. Each recess 22c is in contact with the upper surface of cell case 17 (upper surface 12 of power storage cell 10) with a thermally conductive adhesive 220 in between.

Panel member 23 is provided below bottom portion 21g of lower case 21. The peripheral edge of panel member 23 is connected to lower case 21 with a bracket 24 in between. In the present embodiment, bottom portion 21g of lower case 21 and panel member 23 form a "bottom wall 25".

Space defining portion 50, together with at least one power storage cell 10 and bottom wall 25, defines first smoke exhaust space S21 below at least one power storage cell 10. In the present embodiment, space defining portion 50, together with each power storage stack 110 and bottom wall 25, defines first smoke exhaust space S21 below each power storage stack 110. In other words, four first smoke exhaust spaces S21 are formed in housing 20 in the present embodiment.

Space defining portion 50 is in contact with lower surface 11 of at least one power storage cell 10 and bottom wall 25. Space defining portion 50 may support each power storage cell stack 110. In the present embodiment, space defining portion 50 has a pair of base portions 51, a pair of lower surface contact portions 52, a pair of inner seal portions 53, and a pair of outer seal portions 54.

The pair of base portions 51 are connected to bottom wall 25. In the present embodiment, each base portion 51 is connected to bottom portion 21g of lower case 21. The pair of base portions 51 are positioned to face each other with gas exhaust valve SV in between in the Y direction (width direction). Each base portion 51 has a connection portion 51a and a raised portion 51b.

Connection portion 51a is connected to bottom portion 21g of lower case 21. Connection portion 51a is formed flat.

Raised portion 51b is raised upward from connection portion 51a. Raised portion 51b is separated from bottom portion 21g of lower case 21. Raised portion 51b is formed flat.

The pair of lower surface contact portions 52 are in contact with the Y-direction (width-direction) edges of lower surface 11 of power storage cell 10. The pair of lower surface contact portions 52 are positioned to face each other with gas exhaust valve SV in between in the Y direction. Each lower surface contact portion 52 extends in the X direction. The pair of lower contact portions 52 may serve to restrain each power storage stack 110. The portion of lower surface 11 of each power storage cell 10 other than the portion that is in contact with lower contact portions 52 is in contact with first smoke exhaust space S21.

The pair of inner seal portions 53 are positioned to face each other with gas exhaust valve SV in between in the Y direction. Each inner seal portion 53 is in contact with lower surface 11 of power storage cell 10 and raised portion 51b of base portion 51. Each inner seal portion 53 may be made of urethane resin.

The pair of outer seal portions 54 are disposed outside of the pair of inner seal portions 53, respectively, in the Y direction. Each outer seal portion 54 is in contact with lower surface 11 of power storage cell 10 and raised portion 51b of base portion 51. Each outer seal portion 54 has an upper seal portion 54a and a lower seal portion 54b.

Upper seal portion 54a is provided between lower surface 11 of each power storage cell 10 and lower surface contact portion 52. Lower seal portion 54b is provided between lower surface contact portion 52 and base portion 51 (raised portion 51b).

First smoke exhaust space S21 is formed by the pair of inner seal portions 53, the pair of outer seal portions 54, and lower surface 11 of power storage cell 10.

Cross member 30 reinforces bottom wall 25. Cross member 30 is disposed between a pair of cell bodies 10b that are adjacent to each other in the Y direction and below the pair of external terminals 18 that are adjacent to each other in the Y direction. Cross member 30 overlaps, in the upward-downward direction, both the pair of external terminals 18 facing each other in the Y direction.

The X-direction end of cross member 30 may be in contact with peripheral wall portion 21a, or may be separated from peripheral wall portion 21a. Cross member 30 is connected to base portion 51. In the present embodiment, cross member 30 is connected to raised portion 51b of base portion 51 by welding or the like. Cross member 30 is shaped to project upward from raised portion 51b. The Y-side end (flange portion 33, which will be described later) of cross member 30 is sandwiched between base portion 51 and lower seal portion 54b. The sum of the thickness of upper seal portion 54a, the thickness of lower contact portion 52, the thickness of lower seal portion 54b, and the thickness of the end of cross member 30 is equal to the thickness of inner seal portion 53.

Cross member 30 has a hat shape in a sectional view taken along the Y direction. Specifically, cross member 30 has an upper end surface portion 31, a pair of side surface portions 32, and a pair of flange portions 33. One and the other of the pair of side surface portions 32 are provided to extend downward from the Y1-side end and the Y2-side end, respectively, of upper end surface portion 31. One on the Y1 side of the pair of flange portions 33 extends from the lower end on the Y1 side of side panel 32 to the Y1 side. One on the Y2 side of the pair of flange portions 33 extends from the lower end on the Y2 side of side panel 32 to the Y2 side.

Cooler 70 is provided on upper wall 22a. More specifically, cooler 70 is provided in recess 22c of upper wall 22a.

Cooler 70 is in thermal contact with at least one power storage cell 10 via upper wall 22a. In the present embodiment, a thermally conductive adhesive 70a extending along the X direction is provided between cooler 70 and recess 22c. In other words, in the present embodiment, cooler 70 is in thermal contact with each power storage stack 110 via upper wall 22a and thermally conductive adhesive 70a. Being in thermal contact includes a manner in which cooler 70 is in contact with power storage cell 10 via upper wall 22a alone and a manner in which cooler 70 is in indirect contact with power storage cell 10 via a thermally conductive member (such as an adhesive or a fixing member).

Covering member 72 covers cooler 70. Covering member 72 may be made of a material having heat insulating properties. In Figs. 2 and 4, covering member 72 is not shown.

Covering member 72, together with cooler 70, forms at least a part of floor 950 of vehicle compartment C (Fig. 4). Floor 950 of vehicle compartment C may include the floor components (e.g., buffer component, carpet) disposed on covering member 72, in addition to cooler 70 and covering member 72. In Figs. 2 and 4, the floor components are not shown.

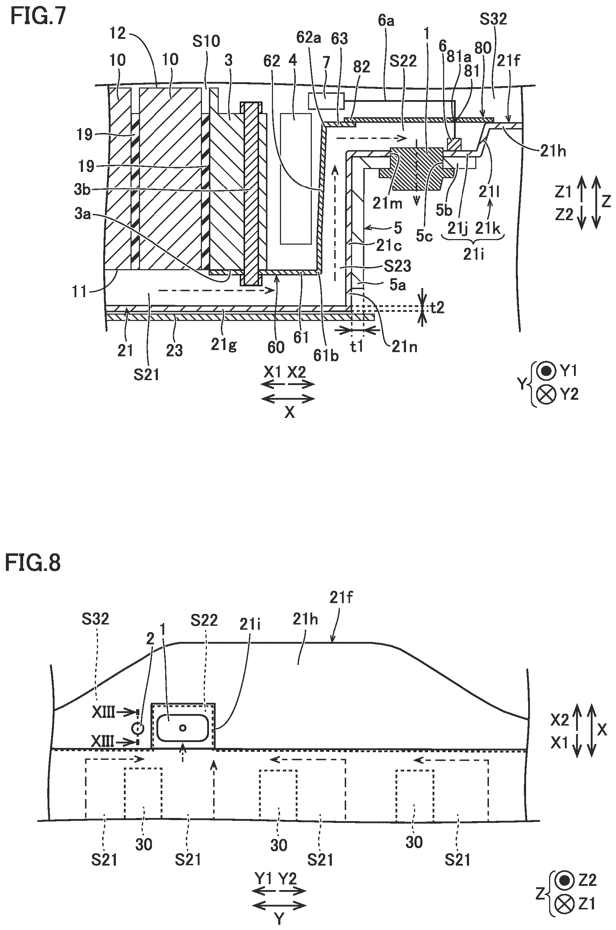

Fig. 7 is a partially enlarged view of smoke exhaust valve 1 and its vicinity in Fig. 4. Power storage device 100 further includes a mount member 5, a smoke exhaust detection thermistor 6, and a device circuit 7.

In the present embodiment, smoke exhaust valve 1 is disposed above lower surface 11 of power storage cell 10. As a result, even if power storage device 100 is subjected to an impact from below, an impact on smoke exhaust valve 1 can be suppressed because smoke exhaust valve 1 is disposed at a relatively high position. This can suppress damage to smoke exhaust valve 1.

In addition, smoke exhaust valve 1 is disposed below upper surface 12 of power storage cell 10. This can suppress an increase in the height of power storage device 100 in the upward-downward direction (miniaturize power storage device 100) compared to the case where smoke exhaust valve 1 is disposed above upper surface 12.

Protruding portion 21f has a body portion 21h and a recessed portion 21i. Recessed portion 21i is formed to be recessed downward from body portion 21h.

Recessed portion 21i is formed by bottom surface 21j and a peripheral wall 21k. Second smoke exhaust space S22 is formed by bottom surface 21j, peripheral wall 21k, and partition plate 80.

Bottom surface 21j extends horizontally below body portion 21h. Peripheral wall 21k extends upward from the outer peripheral edge of bottom surface 21j. Peripheral wall 21k connects bottom surface 21j to body portion 21h.

Peripheral wall 21k surrounds second smoke exhaust space S22 (smoke exhaust valve 1). Peripheral wall 21k is open on the X1 side. This causes second smoke exhaust space S22 to be in communication with connecting flow path S23.

Peripheral wall 21k includes a side wall 21l. Side wall 21l extends upward from the X2-side edge of bottom surface 21j.

Smoke exhaust valve 1 is disposed in recessed portion 21i. As a result, smoke exhaust valve 1 can be disposed at a lower position than when smoke exhaust valve 1 is disposed in body portion 21h. As a result, the space above smoke exhaust valve 1 can be made larger, thus allowing other members to be easily disposed in the space above smoke exhaust valve 1.

Specifically, smoke exhaust valve 1 is provided in bottom surface 21j. More specifically, smoke exhaust valve 1 is inserted into a through hole 21m formed in bottom surface 21j. As a result, the gas in second smoke exhaust space S22 is discharged to the outside through smoke exhaust valve 1.

Body portion 21h extends horizontally from the upper edge of peripheral wall 21k. Second device space S32 is formed by body portion 21h. Second device space S32 may be formed by body portion 21h and upper cover 22.

Smoke exhaust detection thermistor 6 is disposed in second smoke exhaust space S22. Specifically, smoke exhaust detection thermistor 6 is disposed on bottom surface 21j of recessed portion 21i.

**In** the present embodiment, smoke exhaust detection thermistor 6 is provided adjacent to smoke exhaust valve 1 and on the side opposite (X2 side) to power storage cell 10 relative to smoke exhaust valve 1. As a result, gas can reach smoke exhaust valve 1 before reaching smoke exhaust detection thermistor 6, thus suppressing direct contact of the gas with smoke exhaust detection thermistor 6. This can suppress a failure of smoke exhaust detection thermistor 6 due to the heat of the gas, debris, or the like.

Specifically, smoke exhaust detection thermistor 6 is disposed between smoke exhaust valve 1 and side wall 211. Smoke exhaust detection thermistor 6 may be disposed on the side closer to smoke exhaust valve 1 relative to the center between smoke exhaust valve 1 and side wall 21l. This can suppress contact of debris, accumulated at the lower portion of side wall 211, with smoke exhaust detection thermistor 6. The position of smoke exhaust detection thermistor 6 is not limited to the above example. For example, smoke exhaust detection thermistor 6 may be attached to the inner surface of side wall 21l.

Smoke exhaust detection thermistor 6 is electrically connected to device circuit 7 by a wire harness 6a. This allows smoke exhaust detection thermistor 6 and device circuit 7 to send and receive signals and electric power through wire harness 6a.

Partition plate 80 has a through hole 81 that causes wire harness 6a to pass therethrough. A small gap 81a is formed between the inner surface of through hole 81 and wire harness 6a. This allows air to flow through through hole 81 (gap 81a), unlike when gap 81a is not formed. As a result, the air that has flowed in from smoke exhaust valve 1 can flow to second device space S32 through through hole 81. This can suppress flowing of the air (oxygen) that has flowed in from smoke exhaust valve 1 toward power storage cell 10 generating heat.

**In** addition, compared to the case where wire harness 6a is not inserted into through hole 81 (i.e., the case where gap 81a is larger), flowing of gas through through hole 81 (gap 81a) can be suppressed. This can suppress flowing of gas from smoke exhaust space S20 to second device space S32.

Mount member 5 is provided on the outer surface of lower case 21. Smoke exhaust valve 1 is fixed to mount member 5 to be fixed to lower case 21. Specifically, mount member 5 is provided on the outer surface of each of side wall portion 21c and protruding portion 21f (bottom surface 21j) of lower case 21. Mount member 5 is fixed to the above-described outer surface by welding or the like. Mount member 5 may be made of, for example, aluminum.

As mount member 5 is provided on the outer surface of lower case 21 as described above, an impact on lower case 21 from outside can be mitigated by mount member 5. As a result, damage to lower case 21, power storage cell 10, and the like can be suppressed.

Specifically, mount member 5 includes a first part 5a and a second part 5b. First part 5a is provided on the outer surface of side wall portion 21c of lower case 21. First part 5a is provided along side wall portion 21c. Second part 5b is provided on the outer surface of bottom surface 21j of lower case 21. Second part 5b is provided along bottom surface 21j. Second part 5b is provided to protrude from the upper end of first part 5a to the X2 side. Second part 5b is integrally formed with first part 5a. Mount member 5 has an L shape in a cross section taken along the X direction.

As second part 5b is provided in mount member 5 as described above, an impact from the X2 side can be effectively mitigated by second part 5b. This can more effectively suppress damage to the plurality of power storage cells 10 disposed on the X1 side of side wall portion 21c.

Second part 5b has a through hole 5c into which smoke exhaust valve 1 is inserted. **In** other words, smoke exhaust valve 1 passes through through hole 5c of mount member 5 and through hole 21m of bottom surface 21j to be inserted into second smoke exhaust space S22.

Mount member 5 is higher in rigidity than housing 20 (e.g., lower case 21). Specifically, a thickness t1 of mount member 5 is greater than a thickness t2 of lower case 21. The thickness refers to the thickness of a sheet metal of each of mount member 5 and lower case 21.

As shown in Fig. 7, gas flows in the X2 direction in first smoke exhaust space S21. Side wall portion 21c has a counter portion 21n positioned in front of first smoke exhaust space S21 in the X2 direction. Smoke exhaust valve 1 is disposed above counter portion 21n.

Thus, smoke exhaust valve 1 can be disposed above the debris formed in the vicinity of counter portion 21n, suppressing flowing of the debris to smoke exhaust valve 1 compared to the case where smoke exhaust valve 1 is provided below, or to the side of, the debris.

Counter portion 21n is provided at the lower end of side wall portion 21c. In other words, counter portion 21n is connected to bottom portion 21g of lower case 21. Thus, the debris formed in the vicinity of counter portion 21n is deposited on bottom portion 21g.

**In** addition, a spacer 19 is disposed in the gap between power storage cells 10 and in the gap between power storage cell 10 and end plates 3. Consequently, leakage of gas flowing through first smoke exhaust space S21 to the cell space through the above-described gap can be prevented by spacer 19.

Fig. 8 is a partially enlarged view of smoke exhaust valve 1 and its vicinity as viewed from below. As shown in Fig. 8, each gas (indicated by the alternate long and short dash line in Fig. 8) flowing through first smoke exhaust space S21 flows into second smoke exhaust space S22 in which smoke exhaust valve 1 is provided.

**In** the present embodiment, breathing membrane 2 is disposed in second device space S32. Specifically, breathing membrane 2 is disposed in body portion 21h of protruding portion 21f that forms second device space S32. Breathing membrane 2 regulates the internal pressure of second device space S32 by allowing gas to flow therethrough. Breathing membrane 2 allows entry and exit of gas into and from second device space S32.

Thus, breathing membrane 2 is disposed in second device space S32, which is different from second smoke exhaust space S22 in which smoke exhaust valve 1 is disposed, and accordingly, thermal impact of gas on breathing membrane 2 can be suppressed.

Second device space S32 is formed at a position that is separated from vehicle compartment C (Fig. 4) and is adjacent to the outside of vehicle 900. The outside of vehicle 900 described above is the region below protruding portion 21f. This can suppress flowing of gas into vehicle compartment C through breathing membrane 2 and also discharge the gas to the outside of vehicle 900 through breathing membrane 2.

Referring again to Fig. 7, second device space S32 in which breathing membrane 2 (Fig. 8) is disposed is formed above second smoke exhaust space S22 in which smoke exhaust valve 1 is disposed. Smoke exhaust valve 1 is disposed below breathing membrane 2 by an amount by which recessed portion 21i is recessed downward.

This allows the gas to be discharged downward from smoke exhaust valve 1, effectively suppressing an impact of the gas on breathing membrane 2 disposed above smoke exhaust valve 1. As a result, a thermal impact of the gas on breathing membrane 2 can be suppressed more effectively.

Fixing member 60 is fastened to a lower surface 3a of end plate 3 with a bolt 3b. Fixing member 60 extends from end plate 3 along bottom portion 21g and side wall portion 21c of lower case 21.

In the present embodiment, fixing member 60 forms connecting flow path S23 between bottom portion 21g and side wall portion 21c of lower case 21.

Thus, the number of components of power storage device 100 can be reduced and the configuration of power storage device 100 can be simplified compared to the case where the member that fixes end plate 3 and the member that forms connecting flow path S23 are provided separately.

Specifically, fixing member 60 includes a side surface 62 and an upper end surface 63 in addition to fixing surface 61 described above. Fixing surface 61, side surface 62, and upper end surface 63 are integrally formed. Fixing member 60 is made of a metal (e.g., iron).

Fixing surface 61 is fastened to lower surface 3a of end plate 3. Fixing surface 61 extends from lower surface 3a of end plate 3 to the X2 side (side wall portion 21c side). Fixing surface 61 extends along bottom portion 21g of lower case 21.

Side surface 62 extends upward from edge 61b of fixing surface 61 on the X2 side. Side surface 62 extends along side wall portion 21c of lower case 21. A part on the upper end 62a side of side surface 62 is positioned above bottom surface 21j of lower case 21 (the upper end of side wall portion 21c). Side surface 62 also extends in the Y direction. In addition, monitoring unit 4 is disposed in the gap between side surface 62 and end plate 3.

Upper end surface 63 extends from upper end 62a of side surface 62 to the X2 side. Upper end surface 63 extends horizontally. Upper end surface 63 also extends in the Y direction. Upper end surface 63 may be provided at the same position as that of body portion 21h of protruding portion 21f in the Z direction.

Upper end 62a of side surface 62 is provided on the X1 side relative to bottom surface 21j (and side wall portion 21c) of lower case 21. Thus, at least part of upper end surface 63 is provided on the X1 side relative to bottom surface 21j (and side wall portion 21c). Consequently, the gas flowing along side wall portion 21c flows toward second smoke exhaust space S22 (X2 side) after colliding (coming into contact) with upper end surface 63.

End 82 of partition plate 80 on the X1 side is fixed to upper end surface 63. The outer peripheral edge (of the lower surface) of partition plate 80 may be connected to each of upper end surface 63 and body portion 21h via a sealing member with a bolt or the like.

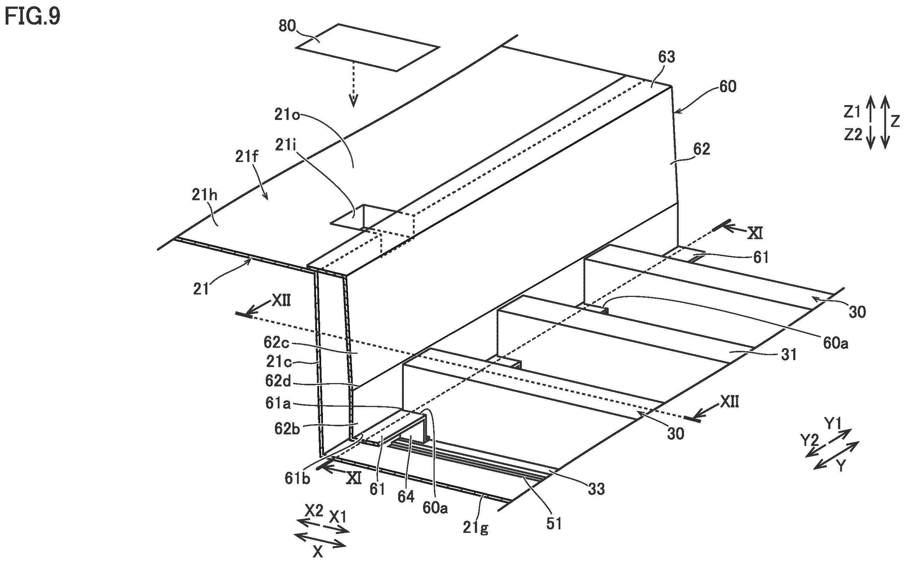

Fig. 9 is a sectional perspective view showing configurations of lower case 21 and fixing member 60. Upper end surface 63 of fixing member 60 is connected to an upper surface 21o of body portion 21h of protruding portion 21f. Upper end surface 63 and upper surface 21o may be connected to each other using an adhesive, welding, or the like. This can prevent gas from escaping from between upper end surface 63 and upper surface 21o.

Fixing member 60 includes a plurality of (only one leg portion is shown in Fig. 9) leg portions 64. Leg portion 64 is connected to both edges in the Y direction of each of the plurality of fixing surfaces 61. Each of the plurality of leg portions 64 extends downward from fixing surface 61.

Side surface 62 of fixing member 60 includes a vertical surface 62b and an inclined surface 62c. Vertical surface 62b extends upward from an edge 61b (and connection portion 61a) of fixing surface 61. Vertical surface 62b extends perpendicularly to the horizontal surface.

Inclined surface 62c extends upward from an upper edge 62d of vertical surface 62b. Inclined surface 62c is inclined so as to approach side wall portion 21c of lower case 21 upward from upper edge 62d. In other words, the distance between side wall portion 21c and inclined surface 62c decreases upward. Inclined surface 62c is connected to upper end surface 63.

Thus, side surface 62 is bent at the boundary between vertical surface 62b and inclined surface 62c. In the Z direction, upper edge 62d of vertical surface 62b may be provided at the same position as that of upper end surface portion 31 of cross member 30. Side surface 62 may be formed flat without being bent.

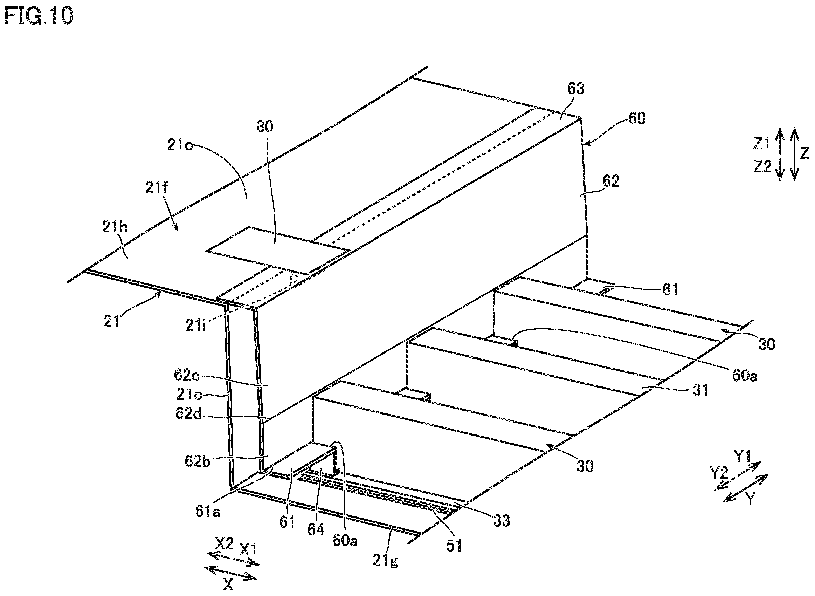

Fig. 10 shows the state in which recessed portion 21i is covered from above by partition plate 80, from the state shown in Fig. 9. Consequently, recessed portion 21i is sealed.

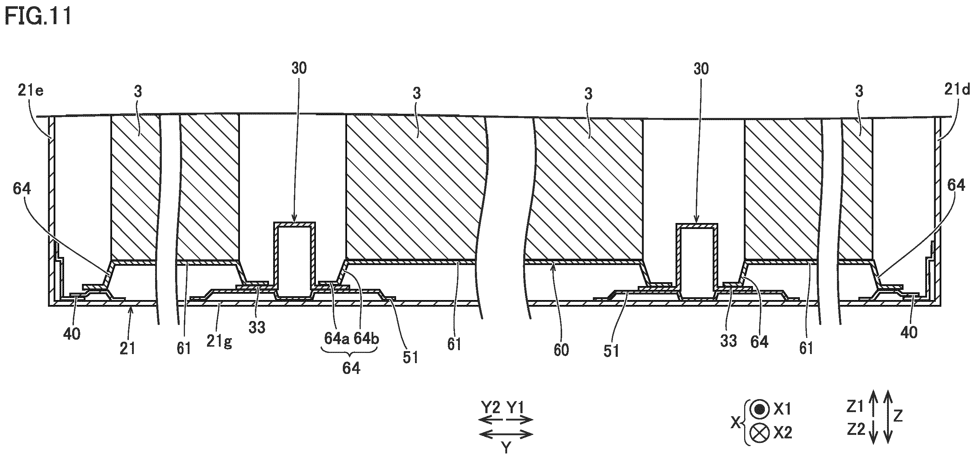

Fig. 11 is a sectional view taken along the line XI-XI in Fig. 9. As shown in Fig. 11, support member 40 provided along each of side wall portion 21d and side wall portion 21e supports leg portion 64 of fixing member 60 from below. In addition, flange portion 33 of cross member 30 supports leg portion 64 from below.

Leg portion 64 of fixing member 60 includes a contact portion 64a and a connection portion 64b. Contact portion 64a is bonded to flange portion 33 of cross member 30 or support member 40 using an adhesive, welding, or the like. This can prevent gas flowing below fixing surface 61 from escaping from between leg portion 64 and each of cross member 30 and support member 40. In addition, contact portion 64a extends in each of the X direction and the Y direction.

Connection portion 64b connects fixing surface 61 to contact portion 64a. Connection portion 64b extends in each of the X direction and the Z direction.

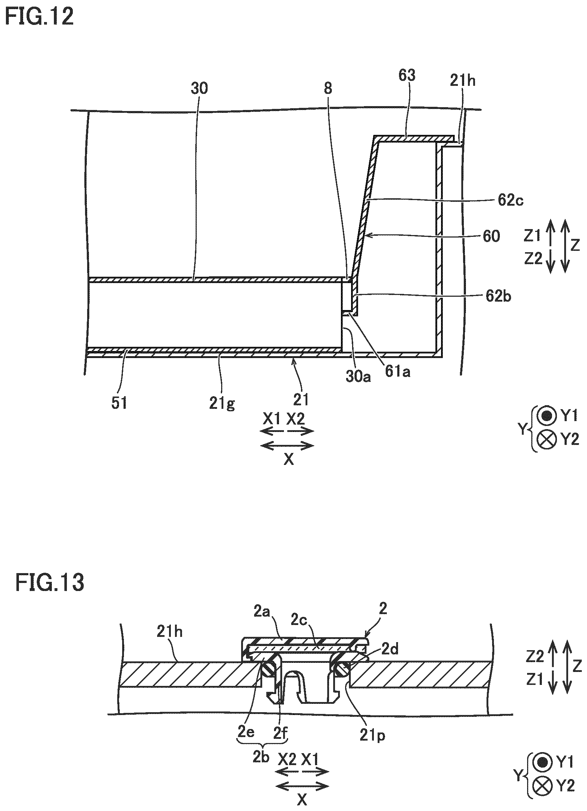

Fig. 12 is a sectional view taken along the line XII-XII in Fig. 9. Power storage device 100 includes an adhesive 8. Adhesive 8 bonds cross member 30 to fixing member 60. Alternatively, a seal member, for example, a gasket, may be provided in place of adhesive 8.

End 30a of cross member 30 in the X direction (on the X2 side in Fig. 12) is in contact with connection portion 61a of fixing member 60. Adhesive 8 is disposed (charged) in a resultant gap between end 30a and vertical surface 62b. This can prevent gas from escaping from the gap between cross member 30 and fixing member 60.

In power storage device 100 configured as described above, smoke exhaust valve 1 is provided in protruding portion 21f and is disposed above lower surface 11 of power storage cell 10. This can suppress an impact of interference (e.g., road surface interference) from below power storage device 100 on smoke exhaust valve 1. This can suppress damage to smoke exhaust valve 1.

Fig. 13 is a sectional view of breathing membrane 2. Breathing membrane 2 includes a cap 2a, a bottom 2b, a ventilation membrane 2c, and an O-ring 2d. Bottom 2b of breathing membrane 2 passes through a through hole 21p of body portion 21h. Bottom 2b has a first part 2e located on the Z2 side of through hole 21p and a second part 2f that extends from first part 2e to the Z1 side and passes through through hole 21p. First part 2e has, for example, a flange shape. Second part 2f has, for example, a tubular (e.g., cylindrical) shape allowing gas to flow therethrough.

O-ring 2d surrounds bottom 2b (second part 2f). O-ring 2d is sandwiched between the outer peripheral surface of second part 2f and the inner peripheral surface of through hole 21p. O-ring 2d is, for example, a silicon-based sealing material.

Cap 2a covers bottom 2b from the Z1 side. Ventilation membrane 2c is provided between cap 2a and first part 2e of bottom 2b. Gas flows through ventilation membrane 2c and second part 2f of bottom 2b into housing 20 (or out of housing 20) (Fig. 4).

The configuration of breathing membrane 2 is not limited to the example shown in Fig. 13.

### [Modifications]

The above embodiment has described the example in which smoke exhaust valve 1 is disposed in protruding portion 21f of lower case 21, but the present disclosure is not limited thereto. Smoke exhaust valve 1 may be disposed other than in protruding portion 21f.

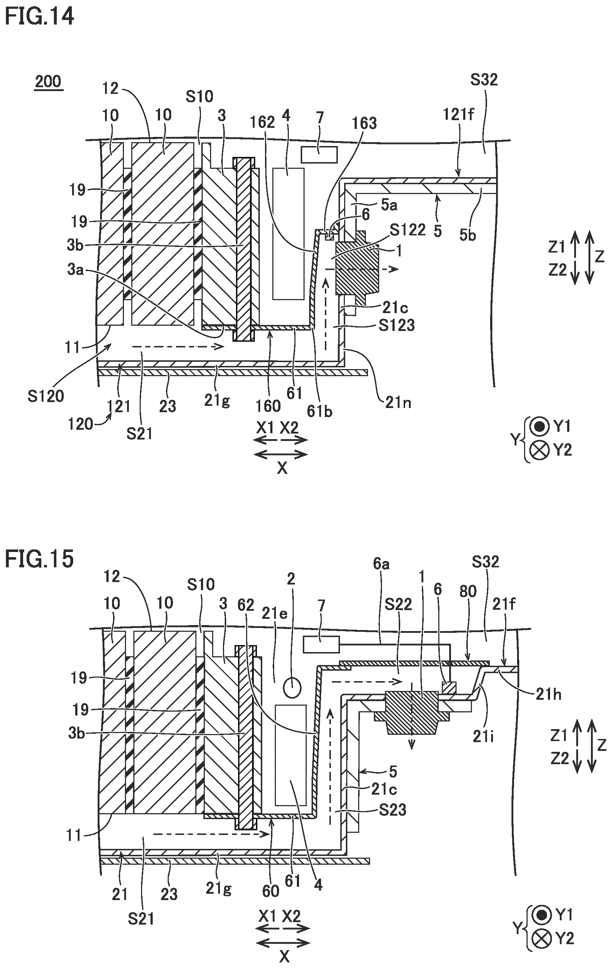

Description will be specifically given with reference to the example shown in Fig. 14. A power storage device 200 is different from power storage device 100 of the embodiment described above in that it includes a housing 120 including a lower case 121, and a fixing member 160. Lower case 121 includes bottom portion 21g, side wall portion 21c, and a protruding portion 121f. Protruding portion 121f protrudes from the upper end of side wall portion 21c to the X2 side. Second part 5b of mount member 5 is provided on protruding portion 121f. Protruding portion 121f does not have a recess such as recessed portion 21i of the above embodiment, but is formed as a flat surface.

Smoke exhaust valve 1 is provided in side wall portion 21c. Specifically, smoke exhaust valve 1 passes through side wall portion 21c and first part 5a of mount member 5 to be inserted into lower case 121. Smoke exhaust valve 1 is disposed above lower surface 11 of power storage cell 10.

Fixing member 160 includes fixing surface 61, a side surface 162, and an upper surface 163. Side surface 162 extends upward from edge 61b of fixing surface 61. Upper surface 163 extends from the upper edge of side surface 162 to side wall portion 21c of lower case 121. Upper surface 163 and side wall portion 21c may be connected to each other using an adhesive, welding, or the like. Upper surface 163 is disposed below protruding portion 121f of lower case 121.

Lower case 121, the plurality of power storage cells 10, and fixing member 160 form a smoke exhaust space S120. Smoke exhaust space S120 includes first smoke exhaust space S21, a second smoke exhaust space S122, and a connecting flow path S123. Second smoke exhaust space S122 is the space between smoke exhaust valve 1 and side surface 162. Connecting flow path S123 connects first smoke exhaust space S21 to second smoke exhaust space S122. The gas discharged from power storage cell 10 flows through first smoke exhaust space S21, connecting flow path S123, and second smoke exhaust space S122 and is then discharged from smoke exhaust valve 1. Second smoke exhaust space S122 is an example of the "second space" in the present disclosure. Smoke exhaust space S120 is an example of the "space through which gas flows" in the present disclosure.

Smoke exhaust detection thermistor 6 may be attached to, for example, the inner surface (the surface on the second smoke exhaust space S122 side) of upper surface 163 of fixing member 60. **In** this case, smoke exhaust detection thermistor 6 may be disposed above smoke exhaust valve 1.

The above embodiment has described the example in which breathing membrane 2 is disposed in device space S30, but the present disclosure is not limited thereto. Breathing membrane 2 may be disposed other than in device space S30.

For example, as shown in Fig. 15, breathing membrane 2 may be disposed in cell space S10. Specifically, in the example shown in Fig. 15, breathing membrane 2 is provided on side wall portion 21e of lower case 21 on the Y2 side. For example, breathing membrane 2 is disposed on the side (X1 side) closer to power storage cell 10 relative to side surface 62 of fixing member 60 and above fixing surface 61 of fixing member 60.

The above embodiment has described the example in which breathing membrane 2 is disposed in second device space S32, but the present disclosure is not limited thereto. Breathing membrane 2 may be disposed in first device space S31.

The above embodiment has described the example in which power storage device 100 is mounted in vehicle 900, but the present disclosure is not limited thereto. Power storage device 100 may be mounted in an electrical device (e.g., stationary power storage device) other than vehicles.

The above embodiment has described the example in which smoke exhaust valve 1 discharges gas downward, but the present disclosure is not limited thereto. Smoke exhaust valve 1 may discharge gas in a direction (e.g., backward) other than downward.

The above embodiment has described the example in which smoke exhaust valve 1 and breathing membrane 2 are provided adjacent to each other, but the present disclosure is not limited thereto. Smoke exhaust valve 1 and breathing membrane 2 may be separated from each other without being adjacent to each other.

The above embodiment has described the example in which smoke exhaust detection thermistor 6 is positioned adjacent to smoke exhaust valve 1, but the present disclosure is not limited thereto. Smoke exhaust detection thermistor 6 and smoke exhaust valve 1 may be separated from each other without being adjacent to each other.

The above embodiment has described the example in which first smoke exhaust space S21 is formed by lower surface 11 of power storage cell 10, but the present disclosure is not limited thereto. For example, first smoke exhaust space S21 may be formed by a member disposed below power storage cell 10.

The above embodiment has described the example in which breathing membrane 2 and smoke exhaust valve 1 are provided in lower case 21, but the present disclosure is not limited thereto. At least one of breathing membrane 2 and smoke exhaust valve 1 may be provided in, for example, upper cover 22, panel member 23, or the like.

The above embodiment has described the example in which mount member 5, to which smoke exhaust valve 1 is fixed, is provided in power storage device 100, but the present disclosure is not limited thereto. Mount member 5 may not be provided in power storage device 100.

The above embodiment has described the example in which thickness t1 of mount member 5 is greater than thickness t2 of lower case 21, and the rigidity of mount member 5 is thus higher than the rigidity of lower case 21, but the present disclosure is not limited thereto. The rigidity of mount member 5 may be higher than the rigidity of lower case 21 because mount member 5 is made of a material higher in rigidity than lower case 21.

The above embodiment has described the example in which mount member 5 includes first part 5a and second part 5b, but the present disclosure is not limited thereto. The mount member may have only one of first part 5a and second part 5b.

The above embodiment has described the example in which smoke exhaust space S20 (connection flow path S23) is formed by fixing member 60 that fixes end plate 3, but the present disclosure is not limited thereto. Smoke exhaust space S20 (connection flow path S23) may be formed by a separate member from the fixing member that fixes end plate 3.

The above embodiment has described the example in which breathing membrane 2 is disposed in device space S30 that is in communication with cell space S10, but the present disclosure is not limited thereto. Breathing membrane 2 may be disposed in a space different from device space S30 which is in communication with cell space S10.

The configurations of the embodiment and modifications described above may be combined with each other.

Although the present embodiments of the present disclosure have been described, it should be understood that the present embodiments disclosed herein are illustrative and non-restrictive in every respect. The scope of the present disclosure is defined by the terms of the claims and is intended to include any modifications within the scope and meaning equivalent to the terms of the claims.

## Claims

1. A power storage device (100, 200) comprising:
a power storage cell (10) including a lower surface (11) on which a gas exhaust valve (SV) is provided;
a housing (20, 120) that accommodates the power storage cell; and
a smoke exhaust valve (1), wherein
the housing has a cell space (S10) in which the power storage cell is disposed,
the smoke exhaust valve is disposed in a space (S20, S120) through which gas discharged from the gas exhaust valve flows,
the housing includes
a bottom portion (21g) disposed below the power storage cell,
a side wall portion (21c) extending upward from an outer peripheral edge of the bottom portion, and
a protruding portion (21f, 121f) protruding from the side wall portion, and
the smoke exhaust valve is provided on the protruding portion or the side wall portion and is disposed above the lower surface of the power storage cell.

2. The power storage device according to claim 1, further comprising a mount member (5) which is provided on an outer surface of the housing and to which the smoke exhaust valve is fixed.

3. The power storage device according to claim 2, wherein the mount member is higher in rigidity than the housing.

4. The power storage device according to claim 2 or 3, wherein the mount member includes
a first part (5a) provided along the side wall portion, and
a second part (5b) connected to an upper end of the first part and provided along the protruding portion.

5. The power storage device according to any one of claims 1 to 3, wherein the space through which the gas flows includes
a first space (S21) formed between the lower surface of the power storage cell and the bottom portion of the housing, and
a second space (S22, S122) in which the smoke exhaust valve is disposed, and
when a direction in which the gas flows in the first space is a flow direction and a portion of the side wall portion is a counter portion (21n), the smoke exhaust valve is disposed above the counter portion, the portion being located in front of the first space in the flow direction.

6. The power storage device according to claim 5, further comprising:
an end plate (3) disposed side by side with the power storage cell; and
a fixing member (60, 160) fastened to the end plate to fix the end plate, wherein
the space through which the gas flows includes a connecting flow path (S23, S123) connecting the first space to the second space,
the fixing member extends from the end plate along the bottom portion and the side wall portion of the housing, and
the fixing member forms the connecting flow path between the bottom portion and the side wall portion.

7. The power storage device (100) according to any one of claims 1 to 3, wherein
the housing includes a lower case (21) covering the power storage cell from below,
the lower case includes the bottom portion, the side wall portion, and the protruding portion (21f),
the protruding portion has a body portion (21h) and a recess (21i) recessed downward from the body portion, and
the smoke exhaust valve is disposed in the recess.
